# EUROPEAN PATENT SPECIFICATION

(11) **EP 3 718 741 B1**
(45) Date of publication and mention of the grant of the patent: **07.12.2022**
(21) Application number: 18884140.7
(22) Date of filing: 22.03.2018
(51) Int. Cl.: B29C 49/56, B29C 49/48, B29C 49/06, B29L 31/00

(54) **OPENABLE/CLOSABLE MOLD AND BASE MOLD LINKAGE DEVICE OF BOTTLE-BLOWING MACHINE**
ÖFFENBARE/SCHLIESSBARE FORM- UND GRUNDFORMGESTÄNGEVORRICHTUNG EINER FLASCHENBLASMASCHINE
DISPOSITIF DE LIAISON DE MOULE DE BASE ET DE MOULE POUVANT ÊTRE OUVERT/FERMÉ DE MACHINE DE SOUFFLAGE DE BOUTEILLE

(30) Priority: 01.12.2017 CN 201711247026
(43) Date of publication of application: 07.10.2020
(73) Proprietor: Jiangsu Newamstar Packaging Machinery Co., Ltd, Suzhou, Jiangsu 215618 (CN)
(72) Inventor: CHEN, Zhongyun, Suzhou Jiangsu 215618 (CN); YE, Peng, Suzhou Jiangsu 215618 (CN); CHENG, Zhong, Suzhou Jiangsu 215618 (CN)
(74) Representative: Baker, Thomas Edward
(86) International application number: PCT/CN2018/079929
(87) International publication number: WO 2019/104910

(56) References cited:
- CN-A- 102 862 285
- CN-A- 104 647 731
- CN-B- 102 862 285
- CN-U- 203 600 597
- CN-U- 206 623 381
- CN-U- 206 623 381
- CN-U- 207 495 998
- US-A1- 2013 115 326
- US-A1- 2016 361 858

## Description

### Cross Reference to Related Application(s)

The present application claims the priority to Chinese Patent Application CN201711247026.6, filed December 1, 2017.

### Technical Field of the Invention

The present disclosure relates to the technical field of bottle-blowing, in particular to a linkage device between mold opening and closing and bottom mold for a bottle-blowing machine.

### Background of the Invention

With the continuous improvement of the single cavity production capacity of the bottle-blowing machine, as the main moving parts of the blow molding machine, the mold opening and closing base and the bottom mold base also have their running stability requirements increased accordingly. In the linkage device of the mold opening and closing base and the bottom mold base of the current bottle-blowing machine, there are many related parts of the mold base structures, which limits the stability of the mold bases.

US20130115326A1 appears to disclose machines for blowing or stretch blow moulding of bottles, wherein the machines having a plurality of moulding units, each moulding unit having a first half-shell and a second half-shell, laterally hinged around a hinge pin having a hinge axis, and a bottom suitable for cooperating to cyclically form a closed cavity suitable for receiving a pre-heated pre-form and for allowing the expansion by stretch blow moulding of the preform inside the cavity so as to obtain a bottle, said moulding unit being arranged to cyclically assume a closed mould configuration and an open mould configuration by means of opening and closing elements of the half-shells towards and away from a closure plane X-X passing through said hinge axis, and movement elements of the bottom, wherein said half-shells and said bottom are actuated in a synchronized manner stating from a single motion inlet comprising a single cam coupling.

CN102862285B appears to disclose a linked connection rod mechanism of bottle blowing machine. The linked connection rod mechanism is complicated in structure which comprises a first link support fixed on right mould frame, a second link support fixed opposite to a sliding rail seat , a first link hinged on the first link support, a second link hinged on the second link support, a third link hinged on the sliding rail, and a fourth link, wherein one end of the fourth link is hinged with the second and third links at the same time, and the other end is hinged with the first link ; and one end of the fourth link hinged with the first link is a cam.

US20160361858A1 appears to disclose a blowing or stretch-blowing machine for bottles made of polymer material, the machine has a plurality of molds movable on a transport system, and each of the molds comprises a system for synchronized opening/closing of the half-molds and of the bottom plate actuated by an actuator thereof independent from motorization of the machine.

CN206623381U appears to disclose a linkage device between mold opening and closing and bottom mold for a bottle-blowing machine, By providing a second shaft, a first drive mechanism and a second drive mechanism, the opening and closing of the opening and closing die carrier and the lifting and lowering of the bottom die carrier are synchronously controlled by the rotation of the second shaft, and the linkage between the opening and closing die carrier and the bottom die carrier is realized. The second drive mechanism includes one end fixed set of first swing arms on the second shaft, provided in the other end of the first swing arm, for the first swing arm. The lifting mechanism of the movement is provided on the bottom mold fixing block for mounting the bottom mold frame above the lifting mechanism.

### Summary of the Invention

The present disclosure is aimed at providing a linkage device between mold opening and closing and bottom mold for a bottle-blowing machine, which reduces the relevance between the mold bases, has a high working efficiency, simple and convenient operation, stable operation, and low equipment cost.

To achieve the above purpose, the technical solution adopted by the present disclosure is:

A linkage device as defined in claim 1.

Preferably, the connecting rod mechanism comprises a sixth shaft fixedly arranged on the other end of the first swing arm, a first joint bearing with one end hinged on the sixth shaft, a second joint bearing with one end hinged on the fifth shaft, and a third connecting rod with two ends respectively hinged on the other end of the first joint bearing and the other end of the second joint bearing.

More preferably, shaft axes of the third shaft, the fourth shaft and the fifth shaft extend along a horizontal direction, and a shaft axis of the sixth shaft extends along a vertical direction.

More preferably, the connecting rod mechanism further comprises a fourth connecting rod, and one end of the fourth connecting rod is hinged on the fifth shaft and the other end thereof is hinged on one end of the second joint bearing.

Preferably, the first drive mechanism comprises a second swing arm with one end fixedly sheathed on the second shaft, a fifth connecting rod with one end hinged on the first mold base for bringing the first mold base to rotate around the first shaft, and a sixth connecting rod with one end hinged on the second mold base for bringing the second mold base to rotate around the first shaft, the other end of the fifth connecting rod being hinged on the other end of the second swing arm, the other end of the sixth connecting rod being also hinged on the other end of the second swing arm.

More preferably, the other end of the fifth connecting rod is hinged on the other end of the second swing arm via a seventh shaft, and the other end of the sixth connecting rod is also hinged on the other end of the second swing arm via the seventh shaft.

More preferably, one end of the fifth connecting rod is hinged on the first mold base via an eighth shaft, the one end of the sixth connecting rod is hinged on the second mold base via a ninth shaft, and a center line along which the eighth shaft and the ninth shaft are distributed axisymmetrically passes through the first shaft.

Preferably, shaft axes of the first shaft and the second shaft respectively extend along a vertical direction.

Due to the application of the above technical solutions, the present disclosure has the following advantages compared with the prior art: In the linkage device between mold opening and closing and bottom mold for a bottle-blowing machine of the present disclosure, by providing a connecting rod mechanism with two ends respectively hinged with the first swing arm and the fifth shaft, the bottom mold base is driven to go up and down when the first swing arm swings; by the first drive mechanism arranged between the second shaft and the mold opening and closing base, the mold opening and closing base is driven to open or close mold when the first swing arm brings the second shaft to rotate; the linkage device reduces the relevance between the mold bases, has a high working efficiency, simple and convenient operation, stable operation, and low equipment cost.

### Brief Description of the Drawings

Figure 1 is a schematic structure diagram of the device of the present disclosure;
Figure 2 is a view of Figure 1 from the P direction;
Figure 3 is a sectional view along the Line A-A in Figure 2 (the bottom mold is in a lifted state);
Figure 4 is a sectional view along the Line A-A in Figure 2 (the bottom mold is in a lowered state);
Figure 5 is a schematic structure diagram of the first drive mechanism.

Wherein, 1 - frame; 2 - first shaft; 3 - first mold base; 4 - second mold base; 5 - bottom mold base; 6 - second shaft; 7 - first swing arm; 8 - third shaft; 9 - first connecting rod; 10 - fourth shaft; 11 - second connecting rod; 12 - fifth shaft; 13 - sixth shaft; 14 - first joint bearing; 15 - second joint bearing; 16 - third connecting rod; 17 - fourth connecting rod; 18 - second swing arm; 19 - fifth connecting rod; 20 - sixth connecting rod; 21 - seventh shaft; 22 - eighth shaft; 23 - ninth shaft; 24 - tenth shaft; 25 - eleventh shaft.

### Detailed Description of Exemplary Embodiments

In the following, the technical solution of the present disclosure are explained in detail combining with the accompanying drawings.

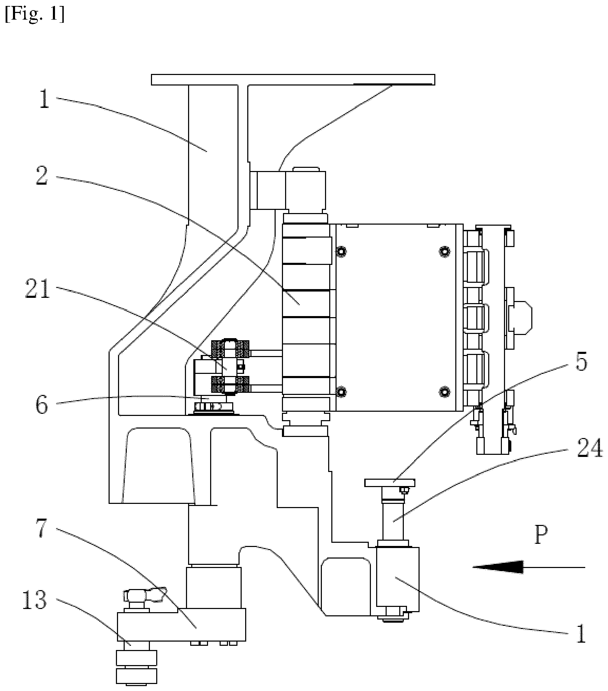

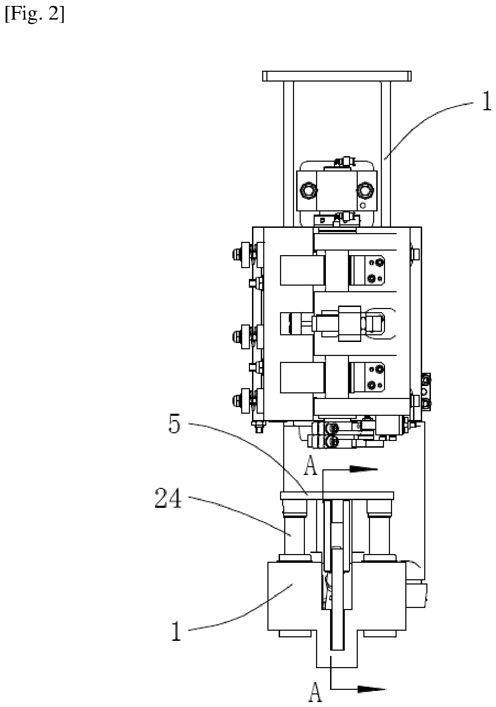

Referring to Figures 1 - 5, in the linkage device between mold opening and closing and bottom mold for a bottle-blowing machine mentioned above, the mold opening and closing base comprises a first mold base 3 rotationally arranged on the frame 1 around a first shaft 2, and a second mold base 4 rotationally arranged on the frame 1 around the first shaft 2 for cooperating with the first mold base 3 to open and close the mold, and the bottom mold base 5 is arranged on the frame 1 capable of going up and down. A shaft axis of the second shaft 2 extends along a vertical direction, and the bottom mold base 5 is arranged below the mold opening and closing base capable of going up and down. In the present embodiment, the bottom mold base 5 is arranged on the frame 1 capable of going up and down via a tenth shaft 24.

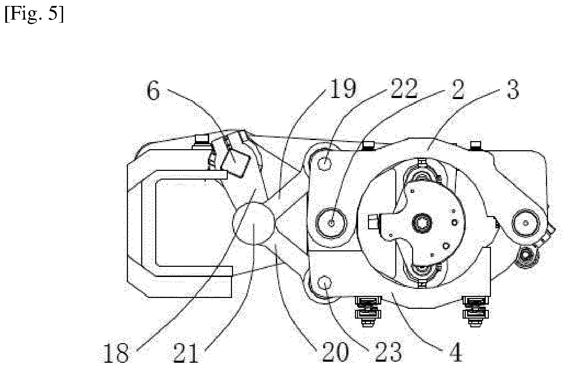

The linkage device comprises a second shaft 6 rotationally arranged on the frame 1 around its own shaft axis direction, a first swing arm 7 with one end fixed onto the second shaft 6 for driving the second shaft 6 to rotate, a first drive mechanism arranged between the second shaft 6 and the mold opening and closing base for driving the first mold base 3 and the second mold base 4 to cooperate with each other for the mold rotational opening and rotational closing when the second shaft 6 is rotated, and a second drive mechanism arranged between the first swing arm 7 and the bottom mold base 5 for driving the bottom mold base 5 to go up and down when the first swing arm 7 swings. A shaft axis of the second shaft 6 extends along the vertical direction. When the second shaft 6 is rotated clockwise (the rotation direction of the second shaft 6 is viewed referring to the view of Figure 5), the first drive mechanism drives the first mold base 3 and the second mold base 4 to cooperate with each other to open mold, and meanwhile, the second drive mechanism drives the bottom mold frame 5 to go down; when the second shaft 6 rotates counter clockwise (the rotation direction of the second shaft 6 is viewed referring to the view of Figure 5), the first drive mechanism drives the first mold base 3 and the second mold base 4 to cooperate with each other to close mold, and meanwhile, the second drive mechanism drives the bottom mold frame 5 to go up.

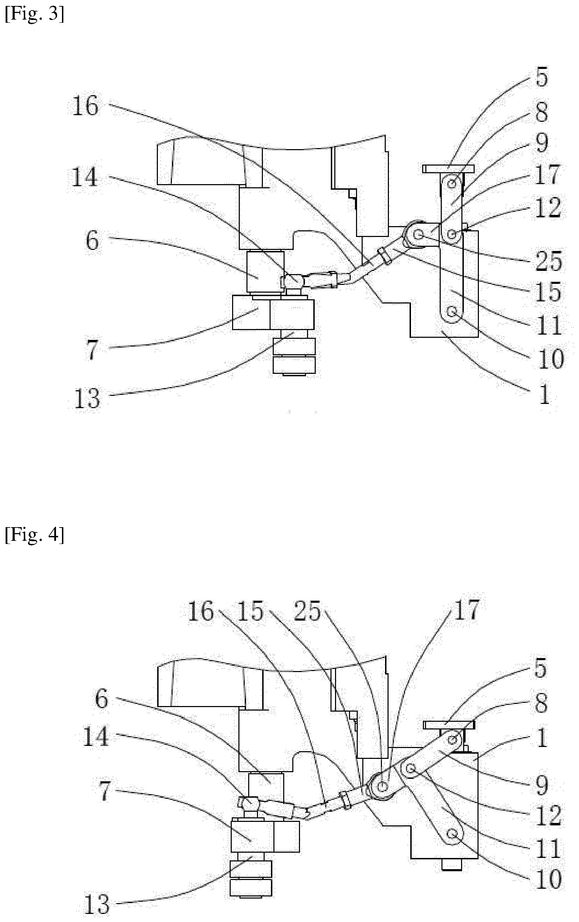

The second drive mechanism comprises a first connecting rod 9 with one end hinged to the bottom mold base 5 via a third shaft 8, and a second connecting rod 11 with one end hinged to the frame 1 via a fourth shaft 10, and the other end of the first connecting rod 9 and the other end of the second connecting rod 11 are hinged to each other via a fifth shaft 12. In the present embodiment, the first connecting rod 9 and the second connecting rod 11 are in the same vertical plane. The second drive mechanism further comprises a connecting rod mechanism with two ends being respectively hinged to the first swing arm 7 and the fifth shaft 12. The connecting rod mechanism is used for driving the bottom mold base 5 to go up and down when the first swing arm 7 swings. In the present embodiment, shaft axes of the third shaft 8, the fourth shaft 10 and the fifth shaft 12 respectively extend along a horizontal direction. Referring to Figure 4, an angle a is formed between the first connecting rod 9 and the second connecting rod 11, and when the two are rotated with respect to each other to reduce the angle a, the bottom mold base 5 goes down; when the two are rotated with respect to each other to increase the angle a, the bottom mold base 5 goes up.

The connecting rod mechanism comprises a sixth shaft 13 fixedly arranged on the other end of the first swing arm 7, a first joint bearing 14 with one end hinged on the sixth shaft 13, a second joint bearing 15 with one end hinged on the fifth shaft 12, and a third connecting rod 16 with two ends respectively hinged on the other end of the first joint bearing 14 and the other end of the second joint bearing 15. In the present embodiment, the connecting rod mechanism further comprises a fourth connecting rod 17, and one end of the fourth connecting rod 17 is hinged on the fifth shaft 12 and the other end of the fourth connecting rod 17 is hinged on one end of the second joint bearing 15. In the present embodiment, the first connecting rod 9, the second connecting rod 11 and the fourth connecting rod 17 are in the same vertical plane. A shaft axis of the sixth shaft 13 extends along the vertical direction. A shaft axis of the eleventh shaft 25 extends along the horizontal direction. In the present embodiment, an angle between the fourth connecting rod 17 and the second connecting rod 11 is 90 degree, and the two integrally form a member with an angle of 90 degree.

When the first swing arm 7 is rotated along a direction away from the bottom mold base 5: the fifth shaft 12 is brought by the connecting rod mechanism to move in a direction away from the bottom mold base 5, causing that the angle a is reduced, at this moment, the bottom mold base 5 goes down.

When the first swing arm 7 is rotated along a direction close to the bottom mold base 5: the fifth shaft 12 is brought by the connecting rod mechanism to move in a direction close to the bottom mold base 5, causing that the angle a is increased, at this moment, the bottom mold base 5 goes up.

The first drive mechanism comprises a second swing arm 18 with one end fixedly sheathed on the second shaft 6, a fifth connecting rod 19 with one end hinged on the first mold base 3 for bringing the first mold base 3 to rotate around the first shaft 2, and a sixth connecting rod 20 with one end hinged on the second mold base 4 for bringing the second mold base 4 to rotate around the first shaft 2, the other end of the fifth connecting rod 19 being hinged on the other end of the second swing arm 18, the other end of the sixth connecting rod 20 being also hinged on the other end of the second swing arm 18. The second swing arm 18, the fifth connecting rod 19 and the sixth connecting rod 20 are respectively distributed along the horizontal direction. The fifth connecting rod 19 and the sixth connecting rod 20 are brought to move by the swinging of the second swing arm 18, that is, the first mold base 3 and the second mold base 4 are brought to rotate around the first shaft 2.

In the present embodiment, the other end of the fifth connecting rod 19 is hinged on the other end of the second swing arm 18 via a seventh shaft 21, the other end of the sixth connecting rod 20 is also hinged on the other end of the second swing arm 18 via the seventh shaft 21. One end of the fifth connecting rod 19 is hinged on the first mold base 3 via an eighth shaft 22, the one end of the sixth connecting rod 20 is hinged on the second mold base 4 via a ninth shaft 23, and a center line along which the eighth shaft 22 and the ninth shaft 23 are distributed axisymmetrically passes through the first shaft 2. The seventh shaft 21, the eighth shaft 22 and the ninth shaft 23 are respectively distributed along the vertical direction

By the rotation of the second shaft 6 around its own shaft axis, the second swing arm 18 is brought to follow the rotation of the second shaft 6. One end of the second swing arm 18 is fixedly sheathed on the second shaft 6.

When the other end of the second swing arm 18 is rotated away from the first shaft 2 (that is, the second shaft 6 is rotated clockwise), the first mold base 3 and the second mold base 4 are brought to rotate and open mold via the fifth connecting rod 19 and the sixth connecting rod 20.

When the other end of the second swing arm 18 is rotated close to the first shaft 2 (that is, the second shaft 6 is rotated counter clockwise), the first mold base 3 and the second mold base 4 are brought to rotate and close mold via the fifth connecting rod 19 and the sixth connecting rod 20.

In the following, the working process of the present embodiment is set forth:
When closing mold:
The first swing arm 7 is rotated along a direction close to the bottom mold base 5, the fifth shaft 12 is brought by the connecting rod mechanism to move in a direction close to the bottom mold base 5, so that the angle a is increased, and the bottom mold base 5 goes up;
at this time, the other end of the second swing arm 18 is rotated close to the first shaft 2 (that is, the second shaft 6 is rotated counter clockwise), the first mold base 3 and the second mold base 4 are brought to rotate and close mold via the fifth connecting rod 19 and the sixth connecting rod 20.

When opening mold:
The first swing arm 7 is rotated along a direction away from the bottom mold base 5, the fifth shaft 12 is brought by the connecting rod mechanism to move in a direction away from the bottom mold base 5, so that the angle a is reduced, and the bottom mold base 5 goes down;
at this time, the other end of the second swing arm 18 is rotated away from the first shaft 2 (that is, the second shaft 6 is rotated clockwise), the first mold base 3 and the second mold base 4 are brought to rotate and open mold via the fifth connecting rod 19 and the sixth connecting rod 20.

The embodiments described above are only for illustrating the technical concepts and features of the present disclosure, and are intended to make those skilled in the art being able to understand the present disclosure and thereby implement it, and should not be concluded to limit the protective scope of this disclosure as defined by the appended claims.

## Claims

1. A linkage device between mold opening and closing and bottom mold for a bottle-blowing machine, the linkage device comprising a frame (1), a mold opening and closing base and a bottom mold base (5), the mold opening and closing base comprising a first mold base (3) rotationally arranged on the frame (1) around a first shaft (2), and a second mold base (4) rotationally arranged on the frame (1) around the first shaft (2) for cooperating with the first mold base (3), the bottom mold base (5) being arranged on the frame (1) capable of going up and down, and the mold opening and closing and bottom mold linkage device further comprising a second shaft (6) rotationally arranged on the frame (1) around its own shaft axis direction, a first swing arm (7) with one end fixed onto the second shaft (6) for driving the second shaft (6) to rotate, a first drive mechanism arranged between the second shaft (6) and the mold opening and closing base for driving the first mold base (3) and the second mold base (4) to cooperate with each other for rotational opening and rotational closing mold when the second shaft (6) is rotated, and a second drive mechanism arranged between the first swing arm (7) and the bottom mold base (5) for driving the bottom mold base (5) to go up and down when the first swing arm (7) swings; **characterized in that**,
the second drive mechanism comprises a first connecting rod (9) with one end hinged to the bottom mold base (5) via a third shaft (8), and a second connecting rod (11) with one end hinged to the frame (1) via a fourth shaft (10), and the other end of the first connecting rod (9) and the other end of the second connecting rod (11) are hinged to each other via a fifth shaft (12); and the second drive mechanism further comprises a connecting rod mechanism with two ends respectively hinged to the first swing arm (7) and the fifth shaft (12) for driving the first connecting rod (9) and the second connecting rod (11) to rotate with respect to each other when the first swing arm (7) swings.

2. The linkage device between mold opening and closing and bottom mold for a bottle-blowing machine according to claim 1 **characterized in that**, the connecting rod mechanism comprises a sixth shaft (13) fixedly arranged on the other end of the first swing arm (7), a first joint bearing (14) with one end hinged on the sixth shaft (13), a second joint bearing (15) with one end hinged on the fifth shaft (12), and a third connecting rod (16) with two ends respectively hinged on the other end of the first joint bearing (14) and the other end of the second joint bearing (15).

3. The linkage device between mold opening and closing and bottom mold for a bottle-blowing machine according to claim 2 **characterized in that**, shaft axes of the third shaft (8), the fourth shaft (10) and the fifth shaft (12) respectively extend along a horizontal direction, and a shaft axis of the sixth shaft (13) extends along a vertical direction.

4. The linkage device between mold opening and closing and bottom mold for a bottle-blowing machine according to claim 2 **characterized in that**, the connecting rod mechanism further comprises a fourth connecting rod (17), and one end of the fourth connecting rod (17) is hinged on the fifth shaft (12) and the other end of the fourth connecting rod (17) is hinged on one end of the second joint bearing (15).

5. The linkage device between mold opening and closing and bottom mold for a bottle-blowing machine according to claim 1 **characterized in that**, the first drive mechanism comprises a second swing arm (18) with one end fixedly sheathed on the second shaft (6), a fifth connecting rod (19) with one end hinged on the first mold base (3) for bringing the first mold base (3) to rotate around the first shaft (2), and a sixth connecting rod (20) with one end hinged on the second mold base (4) for bringing the second mold base (4) to rotate around the first shaft (2), the other end of the fifth connecting rod (19) being hinged on the other end of the second swing arm (18), the other end of the sixth connecting rod (20) being also hinged on the other end of the second swing arm (18).

6. The linkage device between mold opening and closing and bottom mold for a bottle-blowing machine according to claim 5 **characterized in that**, the other end of the fifth connecting rod (19) is hinged on the other end of the second swing arm (18) via a seventh shaft (21), and the other end of the sixth connecting rod (20) is also hinged on the other end of the second swing arm (18) via the seventh shaft (21).

7. The linkage device between mold opening and closing and bottom mold for a bottle-blowing machine according to claim 5 **characterized in that**, one end of the fifth connecting rod (19) is hinged on the first mold base (3) via an eighth shaft (22), the one end of the sixth connecting rod (20) is hinged on the second mold base (4) via a ninth shaft (23), and a center line along which the eighth shaft (22) and the ninth shaft (23) are distributed axisymmetrically passes through the first shaft (2).

8. The linkage device between mold opening and closing and bottom mold for a bottle-blowing machine according to claim 1 **characterized in that**, shaft axes of the first shaft (2) and the second shaft (6) respectively extend along a vertical direction.

9. The linkage device between mold opening and closing and bottom mold for a bottle-blowing machine according to claim 1 **characterized in that**, the connecting rod mechanism comprises a first joint bearing (14), a second joint bearing (15), and a third connecting rod (16), One end of the first joint bearing (14) arranged on the other end of the first swing arm (7), one end of the second joint bearing (15) arranged on the fifth shaft (12), and the two ends of the third connecting rod (16) respectively arranged on the other end of the first joint bearing (14) and the other end of the second joint bearing (15).

## Patentansprüche

1. Eine Verbindungsvorrichtung zwischen einer Formöffnung und -schließung und Bodenform für eine Flaschenblasmaschine, wobei die Verbindungsvorrichtung einen Rahmen (1), eine Formöffnungs- und -schließbasis und eine Bodenformbasis (5) beinhaltet, wobei die Formöffnungs- und -schließbasis eine erste Formbasis (3), die drehbar auf dem Rahmen (1) um eine erste Welle (2) angeordnet ist, und eine zweite Formbasis (4), die drehbar auf dem Rahmen (1) um die erste Welle (2) angeordnet ist, um mit der ersten Formbasis (3) zusammenzuwirken, beinhaltet, wobei die Bodenformbasis (5) auf dem Rahmen (1) angeordnet ist und in der Lage ist, sich zu heben und zu senken, und wobei die Vorrichtung zum Verbinden der Formöffnungs- und -schließung und Bodenform ferner Folgendes beinhaltet: eine zweite Welle (6), die drehbar auf dem Rahmen (1) um die Richtung ihrer eigenen Wellenachse angeordnet ist, einen ersten Schwenkarm (7) mit einem Ende, das an der zweiten Welle (6) befestigt ist, um die zweite Welle (6) drehbar anzutreiben, einen ersten Antriebsmechanismus, der zwischen der zweiten Welle (6) und der Formöffnungs- und -schließbasis angeordnet ist, um die erste Formbasis (3) und die zweite Formbasis (4) in Zusammenwirkung miteinander anzutreiben, um die Form drehbar zu öffnen und drehbar zu schließen, wenn die zweite Welle (6) gedreht wird, und einen zweiten Antriebsmechanismus, der zwischen dem ersten Schwenkarm (7) und der Bodenformbasis (5) angeordnet ist, um die Bodenformbasis (5) anzutreiben, um sich zu heben und zu senken, wenn der erste Schwenkarm (7) schwenkt; **dadurch gekennzeichnet, dass**,
der zweite Antriebsmechanismus eine erste Verbindungsstange (9) mit einem Ende, das über eine dritte Welle (8) an der Bodenformbasis (5) angelenkt ist, und eine zweite Verbindungsstange (11) mit einem Ende, das über eine vierte Welle (10) an dem Rahmen (1) angelenkt ist, beinhaltet, und das andere Ende der ersten Verbindungsstange (9) und das andere Ende der zweiten Verbindungsstange (11) über eine fünfte Welle (12) aneinander angelenkt sind; und der zweite Antriebsmechanismus ferner einen Verbindungsstangenmechanismus mit zwei Enden, die jeweils an dem ersten Schwenkarm (7) und der fünften Welle (12) angelenkt sind, um die erste Verbindungsstange (9) und die zweite Verbindungsstange (11) relativ zueinander drehend anzutreiben, wenn der erste Schwenkarm (7) schwenkt, beinhaltet.

2. Verbindungsvorrichtung zwischen einer Formöffnung und -schließung und Bodenform für eine Flaschenblasmaschine gemäß Anspruch 1, **dadurch gekennzeichnet, dass** der Verbindungsstangenmechanismus Folgendes beinhaltet: eine sechste Welle (13), die fest auf dem anderen Ende des ersten Schwenkarms (7) angeordnet ist, ein erstes Gelenklager (14) mit einem Ende, das an der sechsten Welle (13) angelenkt ist, ein zweites Gelenklager (15) mit einem Ende, das an der fünften Welle (12) angelenkt ist, und eine dritte Verbindungsstange (16) mit zwei Enden, die jeweils an dem anderen Ende des ersten Gelenklagers (14) und dem anderen Ende des zweiten Gelenklagers (15) angelenkt sind.

3. Verbindungsvorrichtung zwischen einer Formöffnung und -schließung und Bodenform für eine Flaschenblasmaschine gemäß Anspruch 2, **dadurch gekennzeichnet, dass** sich Wellenachsen der dritten Welle (8), der vierten Welle (10) und der fünften Welle (12) jeweils entlang einer horizontalen Richtung erstrecken und sich eine Wellenachse der sechsten Welle (13) entlang einer vertikalen Richtung erstreckt.

4. Verbindungsvorrichtung zwischen einer Formöffnung und -schließung und Bodenform für eine Flaschenblasmaschine gemäß Anspruch 2, **dadurch gekennzeichnet, dass** der Verbindungsstangenmechanismus ferner eine vierte Verbindungsstange (17) beinhaltet, und ein Ende der vierten Verbindungsstange (17) an der fünften Welle (12) angelenkt ist und das andere Ende der vierten Verbindungsstange (17) an einem Ende des zweiten Gelenklagers (15) angelenkt ist.

5. Verbindungsvorrichtung zwischen einer Formöffnung und -schließung und Bodenform für eine Flaschenblasmaschine gemäß Anspruch 1, **dadurch gekennzeichnet, dass** der erste Antriebsmechanismus Folgendes beinhaltet: einen zweiten Schwenkarm (18) mit einem Ende, das fest auf der zweiten Welle (6) ummantelt ist, eine fünfte Verbindungsstange (19) mit einem Ende, das an der ersten Formbasis (3) angelenkt ist, um die erste Formbasis (3) dazu zu bringen, sich um die erste Welle (2) zu drehen, und eine sechste Verbindungsstange (20) mit einem Ende, das an der zweiten Formbasis (4) angelenkt ist, um die zweite Formbasis (4) dazu zu bringen, sich um die erste Welle (2) zu drehen, wobei das andere Ende der fünften Verbindungsstange (19) an dem anderen Ende des zweiten Schwenkarms (18) angelenkt ist, wobei das andere Ende der sechsten Verbindungsstange (20) ebenfalls an dem anderen Ende des zweiten Schwenkarms (18) angelenkt ist.

6. Verbindungsvorrichtung zwischen einer Formöffnung und -schließung und Bodenform für eine Flaschenblasmaschine gemäß Anspruch 5, **dadurch gekennzeichnet, dass** das andere Ende der fünften Verbindungsstange (19) über eine siebte Welle (21) an dem anderen Ende des zweiten Schwenkarms (18) angelenkt ist, und das andere Ende der sechsten Verbindungsstange (20) über die siebte Welle (21) ebenfalls an dem anderen Ende des zweiten Schwenkarms (18) angelenkt ist.

7. Verbindungsvorrichtung zwischen einer Formöffnung und -schließung und Bodenform für eine Flaschenblasmaschine gemäß Anspruch 5, **dadurch gekennzeichnet, dass** ein Ende der fünften Verbindungsstange (19) über eine achte Welle (22) an der ersten Formbasis (3) angelenkt ist, ein Ende der sechsten Verbindungsstange (20) über eine neunte Welle (23) an der zweiten Formbasis (4) angelenkt ist und eine Mittellinie, entlang der die achte Welle (22) und die neunte Welle (23) achsensymmetrisch verteilt sind, durch die erste Welle (2) verläuft

8. Verbindungsvorrichtung zwischen einer Formöffnung und -schließung und Bodenform für eine Flaschenblasmaschine gemäß Anspruch 1, **dadurch gekennzeichnet, dass** die Wellenachsen der ersten Welle (2) und der zweiten Welle (6) sich jeweils entlang einer vertikalen Richtung erstrecken.

9. Verbindungsvorrichtung zwischen einer Formöffnung und -schließung und Bodenform für eine Flaschenblasmaschine gemäß Anspruch 1, **dadurch gekennzeichnet, dass** der Verbindungsstangenmechanismus ein erstes Gelenklager (14), ein zweites Gelenklager (15) und eine dritte Verbindungsstange (16) beinhaltet, wobei ein Ende des ersten Gelenklagers (14) an dem anderen Ende des ersten Schwenkarms (7) angeordnet ist, ein Ende des zweiten Gelenklagers (15) an der fünften Welle (12) angeordnet ist und die beiden Enden der dritten Verbindungsstange (16) jeweils an dem anderen Ende des ersten Gelenklagers (14) und an dem anderen Ende des zweiten Gelenklagers (15) angeordnet sind.

## Revendications

1. Un dispositif de liaison entre l'ouverture et fermeture de moule et un moule de fond pour une machine de soufflage de bouteille, le dispositif de liaison comprenant un cadre (1), une base d'ouverture et fermeture de moule et une base de moule de fond (5), la base d'ouverture et fermeture de moule comprenant une première base de moule (3) agencée de façon rotatoire sur le cadre (1) autour d'un premier arbre (2), et une deuxième base de moule (4) agencée de façon rotatoire sur le cadre (1) autour du premier arbre (2) pour coopérer avec la première base de moule (3), la base de moule de fond (5) étant agencée sur le cadre (1) de sorte à pouvoir monter et descendre, et le dispositif de liaison d'ouverture et fermeture de moule et de moule de fond comprenant en outre un deuxième arbre (6) agencé de façon rotatoire sur le cadre (1) autour de la direction de son propre axe d'arbre, un premier bras pivotant (7) avec une extrémité fixée sur le deuxième arbre (6) pour entraîner le deuxième arbre (6) en rotation, un premier mécanisme d'entraînement agencé entre le deuxième arbre (6) et la base d'ouverture et fermeture de moule pour entraîner la première base de moule (3) et la deuxième base de moule (4) en coopération l'une avec l'autre pour l'ouverture rotationnelle et la fermeture rotationnelle du moule lorsque le deuxième arbre (6) est mis en rotation, et un deuxième mécanisme d'entraînement agencé entre le premier bras pivotant (7) et la base de moule de fond (5) pour entraîner la base de moule de fond (5) pour qu'elle monte et descende lorsque le premier bras pivotant (7) pivote ; **caractérisé en ce que**,
le deuxième mécanisme d'entraînement comprend une première tige d'accouplement (9) avec une extrémité articulée sur la base de moule de fond (5) par le biais d'un troisième arbre (8), et une deuxième tige d'accouplement (11) avec une extrémité articulée sur le cadre (1) par le biais d'un quatrième arbre (10), et l'autre extrémité de la première tige d'accouplement (9) et l'autre extrémité de la deuxième tige d'accouplement (11) sont articulées l'une sur l'autre par le biais d'un cinquième arbre (12) ; et le deuxième mécanisme d'entraînement comprend en outre un mécanisme de tige d'accouplement avec deux extrémités articulées respectivement sur le premier bras pivotant (7) et le cinquième arbre (12) pour entraîner la première tige d'accouplement (9) et la deuxième tige d'accouplement (11) en rotation l'une par rapport à l'autre lorsque le premier bras pivotant (7) pivote.

2. Le dispositif de liaison entre l'ouverture et fermeture de moule et un moule de fond pour une machine de soufflage de bouteille selon la revendication 1 **caractérisé en ce que** le mécanisme de tige d'accouplement comprend un sixième arbre (13) agencé de façon fixe sur l'autre extrémité du premier bras pivotant (7), un premier palier de joint (14) avec une extrémité articulée sur le sixième arbre (13), un deuxième palier de joint (15) avec une extrémité articulée sur le cinquième arbre (12), et une troisième tige d'accouplement (16) avec deux extrémités articulées respectivement sur l'autre extrémité du premier palier de joint (14) et l'autre extrémité du deuxième palier de joint (15).

3. Le dispositif de liaison entre l'ouverture et fermeture de moule et un moule de fond pour une machine de soufflage de bouteille selon la revendication 2 **caractérisé en ce que** des axes d'arbre du troisième arbre (8), du quatrième arbre (10) et du cinquième arbre (12) s'étendent respectivement le long d'une direction horizontale, et un axe d'arbre du sixième arbre (13) s'étend le long d'une direction verticale.

4. Le dispositif de liaison entre l'ouverture et fermeture de moule et un moule de fond pour une machine de soufflage de bouteille selon la revendication 2 **caractérisé en ce que** le mécanisme de tige d'accouplement comprend en outre une quatrième tige d'accouplement (17), et une extrémité de la quatrième tige d'accouplement (17) est articulée sur le cinquième arbre (12) et l'autre extrémité de la quatrième tige d'accouplement (17) est articulée sur une extrémité du deuxième palier de joint (15).

5. Le dispositif de liaison entre l'ouverture et fermeture de moule et un moule de fond pour une machine de soufflage de bouteille selon la revendication 1 **caractérisé en ce que** le premier mécanisme d'entraînement comprend un deuxième bras pivotant (18) avec une extrémité gainée de façon fixe sur le deuxième arbre (6), une cinquième tige d'accouplement (19) avec une extrémité articulée sur la première base de moule (3) pour amener la première base de moule (3) en rotation autour du premier arbre (2), et une sixième tige d'accouplement (20) avec une extrémité articulée sur la deuxième base de moule (4) pour amener la deuxième base de moule (4) en rotation autour du premier arbre (2), l'autre extrémité de la cinquième tige d'accouplement (19) étant articulée sur l'autre extrémité du deuxième bras pivotant (18), l'autre extrémité de la sixième tige d'accouplement (20) étant aussi articulée sur l'autre extrémité du deuxième bras pivotant (18).

6. Le dispositif de liaison entre l'ouverture et fermeture de moule et un moule de fond pour une machine de soufflage de bouteille selon la revendication 5 **caractérisé en ce que** l'autre extrémité de la cinquième tige d'accouplement (19) est articulée sur l'autre extrémité du deuxième bras pivotant (18) par le biais d'un septième arbre (21), et l'autre extrémité de la sixième tige d'accouplement (20) est aussi articulée sur l'autre extrémité du deuxième bras pivotant (18) par le biais du septième arbre (21).

7. Le dispositif de liaison entre l'ouverture et fermeture de moule et un moule de fond pour une machine de soufflage de bouteille selon la revendication 5 **caractérisé en ce qu'**une extrémité de la cinquième tige d'accouplement (19) est articulée sur la première base de moule (3) par le biais d'un huitième arbre (22), cette une extrémité de la sixième tige d'accouplement (20) est articulée sur la deuxième base de moule (4) par le biais d'un neuvième arbre (23), et une ligne centrale le long de laquelle le huitième arbre (22) et le neuvième arbre (23) sont distribués de façon axisymétrique traverse le premier arbre (2).

8. Le dispositif de liaison entre l'ouverture et fermeture de moule et un moule de fond pour une machine de soufflage de bouteille selon la revendication 1 **caractérisé en ce que** des axes d'arbre du premier arbre (2) et du deuxième arbre (6) s'étendent respectivement le long d'une direction verticale.

9. Le dispositif de liaison entre l'ouverture et fermeture de moule et un moule de fond pour une machine de soufflage de bouteille selon la revendication 1 **caractérisé en ce que** le mécanisme de tige d'accouplement comprend un premier palier de joint (14), un deuxième palier de joint (15), et une troisième tige d'accouplement (16), une extrémité du premier palier de joint (14) étant agencée sur l'autre extrémité du premier bras pivotant (7), une extrémité du deuxième palier de joint (15) étant agencée sur le cinquième arbre (12), et les deux extrémités de la troisième tige d'accouplement (16) étant agencées respectivement sur l'autre extrémité du premier palier de joint (14) et l'autre extrémité du deuxième palier de joint (15).
